Europäisches Patentamt

European Patent Office

Office européen des brevets

(11) Veröffentlichungsnummer: **0 403 734**
**A2**

(19)

(12) **EUROPÄISCHE PATENTANMELDUNG**

(21) Anmeldenummer: **90104959.3**

(22) Anmeldetag: **16.03.90**

(51) Int. Cl.5: **B60J 7/05**

(30) Priorität: **20.06.89 DE 3919998**

(43) Veröffentlichungstag der Anmeldung:
**27.12.90 Patentblatt 90/52**

(84) Benannte Vertragsstaaten:
**DE ES FR GB SE**

(71) Anmelder: **Alfred Teves GmbH & Co. OHG**
**Othestr. 19**
**D-5275 Bergneustadt(DE)**

(72) Erfinder: **Braun, Achim**
**Kalksteinstrasse 16**
**D-5223 Nümbrecht(DE)**
Erfinder: **Hesseler, Udo**
**Hauptstrasse 23**
**D-5962 Drolshagen(DE)**
Erfinder: **Mesenhöler, Brigitte**
**Enneststrasse 29**
**D-5275 Bergneustadt(DE)**
Erfinder: **Nass, Michael**
**Schöne Aussicht 44**
**D-5275 Bergneustadt(DE)**

(74) Vertreter: **Portwich, Peter**
**c/o ALFRED TEVES GMBH Guerickestrasse 7**
**D-6000 Frankfurt/Main 90(DE)**

(54) **Schiebehebedach für Kraftfahrzeuge.**

(57) Es wird ein Schiebehebedach für Kraftfahrzeuge vorgeschlagen, in deren Dachfläche (3) eine Öffnung vorgesehen ist, die mittels eines Deckels (2) verschließbar ist, der wahlweise mit einer Kante über die Dachfläche (3) ausstellbar ist oder nach Absenken durch in Führungsschienen (4) gelagerte Gleitstücke (6,13) geführt unter die Dachfläche (3) verschiebbar ist, wobei der Deckel (2) mit Trägerteilen (1) verbunden ist, die schwenkbar an je einem Gleitstück (6) angelenkt sind, und die einen Steuerschlitz (15) aufweisen, in welchem jeweils ein Ausstellelement (12,14) eingreift, welches schwenkbar mit dem hinteren Gleitstück (13) verbunden ist. Um eine besonders geringe Einbauhöhe bei stabiler Ausführung zu erreichen, ist vorgesehen, daß im Trägerteil (1) ein weiterer Steuerschlitz (18) vorgesehen ist, in dem, in Längsrichtung der Trägerteile (1) verschiebbar, ein Verbindungsglied (20) angeordnet ist, welches in Eingriff in eine Steuerkulisse (9) des vorderen Gleitstückes (6) bringbar ist.

Fig. 1

## Schiebehebedach für Kraftfahrzeuge

Die Erfindung betrifft ein Schiebehebedach für Kraftfahrzeuge nach dem Oberbegriff des Anspruches 1. Ein derartiges Schiebehebedach ist aus der DE-OS 35 32 104 bekannt, bei welchem die Absenkbewegung des Deckels lediglich durch den Kulissenschlitz bewirkt wird, in welchem der Kulissenstift geführt ist der am Ausstellglied ausgebildet ist. Um das erforderliche Absenkmaß zum Verschieben des Deckels unter das Fahrzeugdach zu erreichen, benötigt der Kulissenschlitz bzw. die Funktionseinheit aus Ausstellglied und Deckelträger unerwünscht viel Raum in vertikaler Richtung.

Der Erfindung liegt daher die Aufgabe zugrunde ein gattungsgemäßes Schiebehebedach für Kraftfahrzeuge zu schaffen, welches sich durch eine besonders geringe Bauhöhe auszeichnet und dabei mit einfachen Mitteln stabil aufgebaut ist. Diese Aufgabe wird erfindungsgemäß durch die kennzeichnenden Merkmale des Anspruches 1 gelöst.

Durch die erfindungsgemäße Lösung wird die Steuerkurve zur Auslösung der Schwenkbewegung des Deckels auf zwei Bauelemente aufgeteilt, wodurch sich eine äußerst geringe Bauhöhe realisieren läßt. Die Einzelhübe addieren sich funktionsgemäß zum Gesamthub. Dadurch, daß der zweite Steuerschlitz und die Steuerkulisse näher am Drehpunkt des Deckels angeordnet sind als das Ausstellelement, wird in vorteilhafter Weise das Hubübersetzungsverhältnis gemäß dem Hebelgesetz ausgenutzt.

Ein weitere Verringerung der Bauhöhe läßt sich dadurch erreichen, daß eine Wasserrinne vorgesehen ist, welche nur in abgesenktem Zustand des Deckels mit letztgenanntem bzw. einem mit diesem starr verbundenen Bauteil in Eingriff steht. Auf diese Weise wird ein Verbindungshebel zwischen Wasserrinne und Ausstellhebel eingesperrt, wie er in der DE-OS 35 32 104 vorgesehen ist. Durch die notwendigen Anlenkpunkte des Verbindungshebels, insbesondere an der Wasserrinne, erhöht sich nämlich die Bauhöhe beträchtlich. Darüberhinaus erhöht sich natürlich durch die beiden Verbindungshebel auch der Bauaufwand. Die erfindungsgemäße Wasserrinnenanordnung dagegen baut ausgesprochen niedrig und ist darüber hinaus besonders einfach montierbar, weil die Montage der Wasserrinne unabhängig von dem Deckel und der Hebemechanik erfolgen kann.

Wird das Verbindungsglied, vorzugsweise mittels eines Schiebers, mit dem Ausstellelement verbunden, so läßt sich eine Schiebedachausführung darstellen, bei welcher nur das hintere Gleitstück mit dem Antriebskabel verbunden ist. Eine bevorzugte Ausführungsform der Erfindung zeichnet sich dadurch aus, daß das Trägerteil ein U-Profil besitzt, innerhalb welchem das Ausstellelement und das Verbindungsglied zentral und symmetrisch angeordnet ist. Durch diese Maßnahme wird eine besonders stabile und steife Schiebedachausführung erreicht, bei der im Gegensatz zur oben genannten Offenlegungsschrift keine aus der Öffnungskraft resultierenden Biegebelastungen um die Längsachse des Deckelträgers entstehen, die vom Deckel bzw. von einer Rahmenkonstruktion aufgenommen werden müßten. Eine besonders günstige Version des erfindungsgemäßen Schiebehebedaches sieht vor, daß das Ausstellelement mittels eines nockenförmigen Bolzens in den Steuerschlitz eingreift, durch den ein Verriegelungselement beaufschlagbar ist.

Eine bevorzugte Ausführungsform der Erfindung sieht Mittel zum Einrasten der Trägerteile in das jeweils zugeordnete Gleitstück bei abgesenkter Deckelkante vor. Dadurch wird auf besonders einfache Weise ein Verklemmen des Deckels in der Öffnung vermieden, da eine Verschiebebewegung des Deckels erst nach Absenken möglich ist. Eine besonders günstig herzustellende Windabweisersteuerung wird dadurch erreicht, daß das vordere Ende des vorderen Gleitstückes als Steuerschieber zur unmittelbaren Beaufschlagung eines Windabweisers ausgebildet ist.

Weitere vorteilhafte Merkmale sowie die Funktion der Erfindung ergeben sich aus nachstehender Beschreibung anhand der Zeichnung.

Hierzu zeigt:

Fig. 1 bis Fig. 3 jeweils eine Seitenansicht des Schiebehebedaches in unterschiedlicher Position,

Fig. 4 und Fig. 5 Seitenansicht bzw. Draufsicht auf den vorderen Bereich des Schiebehebedaches und auf den Windabweiser,

Fig. 6 einen Schnitt entlang der Linie A-A gemäß Fig. 2,

Fig. 7 eine teilweise aufgebrochene Draufsicht auf das Schiebehebedach mit Wasserrinne und Hebelbefestigung,

Fig. 8 und Fig. 9 jeweils eine Seitenansicht des Schiebehebedaches und der Wasserrinne in unterschiedlicher Position.

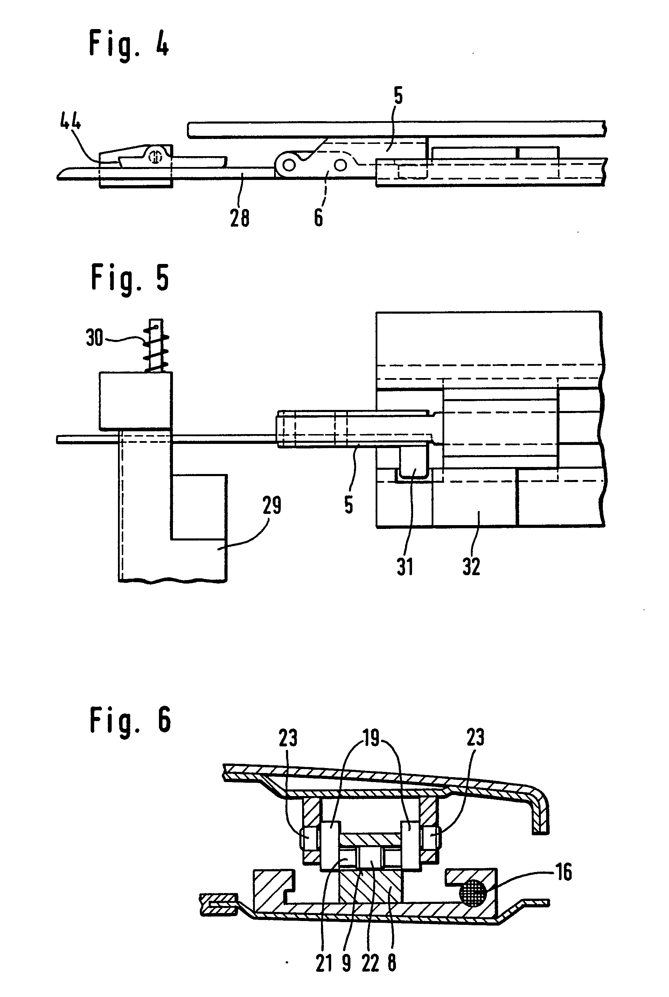

Das Schiebehebedach besitzt zwei identische Schiebehebeeinheiten, die in einer linken und einer rechten Führungsschiene 4 gelagert sind, und von denen im Folgenden eine Funktionseinheit beschrieben wird. Die Schiebehebemechanik weist ein Trägerteil 1 auf, an welchem der Deckel 2 befestigt ist, welcher in der Zeichnung nur angedeutet dargestellt ist. Durch den Deckel 2 ist eine Öffnung im Fahrzeugdach 3 verschließbar. Am Trägerteil 1 ist ein Lagerabschnitt 5 ausgebildet, über welchen das Trägerteil 1 um die Querachse der Führungsschienen 4 schwenkbar mit dem Schlitten 6 verbunden ist. Hierzu ist eine Bolzenverbindung am vorderen Ende des Schlittens 6 vorgesehen. Am hinteren Ende des Schlittens 6 ist, wie auch in Fig. 6 dargestellt, ein Steg 8 ausgebildet, in welchem eine Steuerkulisse 9 vorgesehen ist. Die Steuerkulisse 9 besitzt an ihrem vorderen Ende eine nach oben gerichtete Öffnung 10, einen parallel zur Führungsschiene 4 verlaufenden Mittelabschnitt und einen nach unten geneigten Endabschnitt 11.

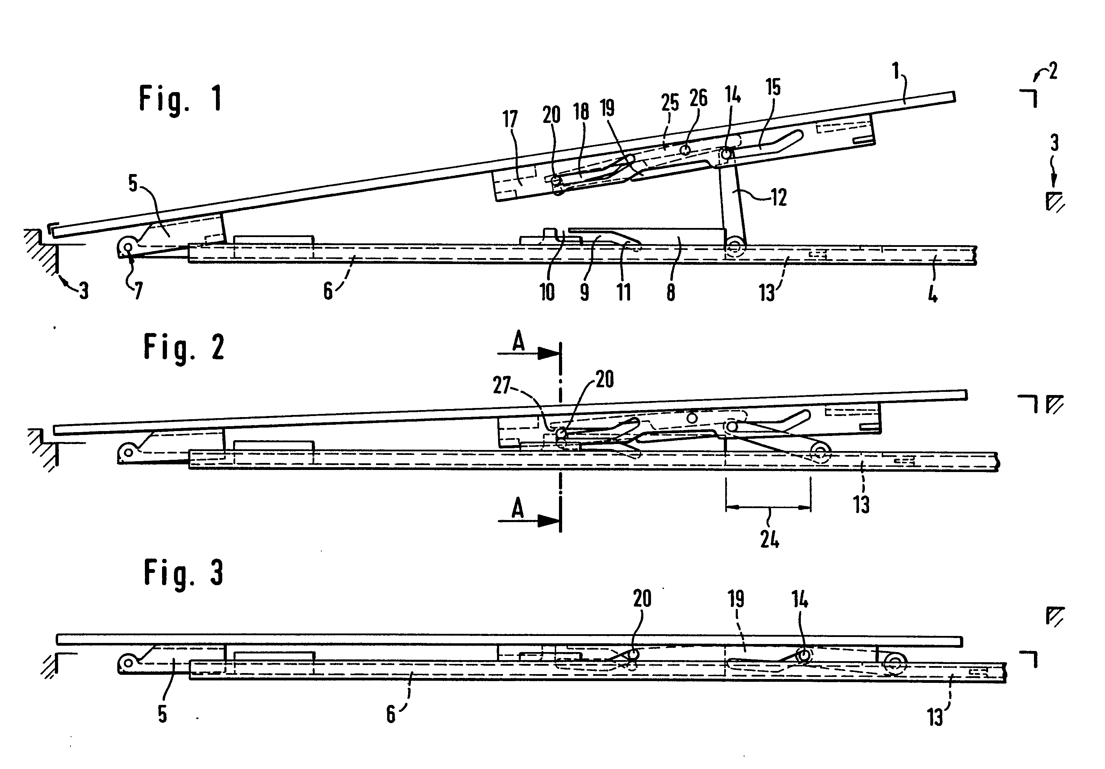

Fig. 1 zeigt das Schiebehebdach in der sogenannten "Lüfterstellung", d.h. der hintere Bereich des Deckels 2 ist über das Fahrzeugdach ausgestellt. Diese Hubbewegung wird durch den Ausstellhebel 12 bewirkt, dessen eines Ende schwenkbar mit dem hinteren Gleitstück 13 verbunden ist, während das andere Ende durch den Bolzen 14 verschiebbar im ersten Steuerschlitz 15 gelagert ist. Das hintere Gleitstück 13 ist wie der Schlitten 6 in der Führungsschiene 4 gelagert; es ist mit dem Antriebskabel 16 fest verbunden. Der Steuerschlitz 15 ist in einem U-Profil 17, welches mit dem Trägerteil fest verbunden ist ausgebildet; der Ausstellhebel 12 ist zentral in diesem U-Profil geführt. Im vorderen Bereich des Profils 17 ist ein weiterer Steuerschlitz 18 ausgebildet, welcher ebenso wie der erste Steuerschlitz 15 einen etwa parallel zur Längsachse des Trägerteils 1 verlaufenden vorderen Abschnitt und einen nach oben abgewinkelten hinteren Abschnitt aufweist.

Der zweite Steuerschlitz 18 hat den gleichen Abstand vom Bolzen 7 wie die im Schlitten 6 ausgebildete Steuerkulisse 9. Im zweiten Steuerschlitz 18 ist ein kurbelwellenförmiges Verbindungsglied 20 gelagert. Dieses setzt sich aus dem gabelförmigen vorderen Endabschnitt des Schiebers 19 zusammen, welches die untere Achse 21 von beiden Seiten einschließt, auf welcher eine Lagerrolle 22 angeordnet ist; parallel zur unteren Achse, vertikal nach oben verschoben, sind am Schieber 19 zwei nach außen zeigende Zapfen 23 ausgebildet, welche in Eingriff in den zweiten Steuerschlitz 18 stehen und das Verbindungsglied 20 und den Schieber 19 axial verschiebbar im zweiten Steuerschlitz lagern. Der Schieber 19 besitzt an seinem anderen Ende eine Bohrung, durch welche der Bolzen 14 geführt ist.

In Fig. 2 ist das Schiebehebedach in geschlossenem Zustand dargestellt. Das vordere Ende des Schlittens 6 liegt dabei an einem nicht dargestellten fahrzeugfesten Anschlag. Der Lagerabschnitt 5 greift mit dem Verriegelungszapfen 31 in einen Verriegelungsvorsprung der Führungsschiene 4 ein, so daß ein axiales Verschieben ausgeschlossen ist. Die untere Achse 21 des Verbindungsgliedes 20 befindet sich auf Höhe der Öffnung 10 im vorderen Endabschnitt der Steuerkulisse 9. Der Ausstellhebel 12 befindet sich in leicht ausgestellter Position, wobei sich der Bolzen 14 im vorderen Bereich des ersten Steuerschlitzes 15 befindet. Der axiale Abstand 24 zwischen dem hinteren Gleitstück 13 und dem Schlitten 5 beträgt etwa 50 Millimeter. Wird das hintere Gleitstück 13 aus der Schließposition heraus nach vorne verschoben, so stellt sich der Ausstellhebel 12 und der Deckel 2 in die Position gemäß Fig. 1 auf. Das hintere Gleitstück 13 liegt dann am Schlitten 6 an. Der drehfest mit dem Ausstellhebel 12 verbundene Bolzen 14 ist nockenförmig ausgebildet und betätigt durch seine Drehbewegung die Verriegelungsstange 25. Die Verriegelungsstange 25 ist am Deckelträger 1 schwenkbar um den Lagerpunkt 26 angelenkt und in Schließrichtung elastisch mit einer geringen Kraft vorgespannt.

In der ausgestellten Position (Fig. 1) wird das dem Bolzen 14 zugeordnete Hebelende der Verriegelungsstange 25 horizontal nach oben beaufschlagt, so daß das gegenüberliegende Hebelende mit der Stufe 27 in das Verbindungsglied 20 eingreift und damit den Schieber 19 verriegelt.

Wird das hintere Gleitstück aus der Schließstellung heraus um etwa 25 Millimeter nach hinten geschoben, so zieht der Ausstellhebel 12 den Bolzen 14 und über den Schieber 19 auch das Verbindungsglied 20 in den jeweils hinteren Endabschnitt der Steuerschlitze 15, 18 bzw. der Steuerkulisse 9. Durch das Verschieben des Verbindungsgliedes 20 in der Steuerkulisse 9 und in den zweiten Steuerschlitz 18 wird der Deckel 2 in seine abgesenkte Position geschwenkt (Fig. 3). Dabei liegt die hintere Kante des Deckels 2 unter dem Niveau des Fahrzeugdaches 3. Der Lagerabschnitt 5 taucht dabei unter die Anschlagfläche 32 der Führungsschiene 4, so daß eine vertikale Verschiebebewegung ermöglicht wird.

Wird der Deckel aus der geöffneten Position wieder nach vorne geschoben, so legt sich am vorderen Ende des Verschiebeweges der Schlitten 6 an einen Anschlag, das hintere Gleitstück 13 legt einen Weg von etwa 25 Millimeter in Richtung auf den Schlitten 5 zurück und das Schiebehebedach befindet sich wieder in der geschlossenen und verriegelten Position gemäß Fig. 2.

Wie aus den Fig. 4 und 5 zu entnehmen ist, ist am vorderen Ende des Schlittens 6 ein Steuerschieber 28 vorgesehen, welcher der Zwangssteuerung eines Windabweisers 29 dient. Der Steuerschieber 28 verläuft parallel zur Führungsschiene 4 und besitzt ein keilförmiges vorderes Ende. Wird der Deckel 2 etwa auf 25 Millimeter nach hinten unter das Fahrzeugdach 3 geschoben, so gerät der Steuerschieber 28 außer Eingriff in den durch die Feder 30 in Öffnungs richtung vorgespannten Windabweiser 29. Dieser legt sich mit seiner Anlagefläche 31 auf die Führungsschiene 4 und wird beim Wiederverschließen kurz vor Erreichen der Schließposition des Deckels 2 durch den Steuerschieber 28 wieder in seine abgesenkte Lage verschwenkt.

In der Fig. 5 ist auch sehr deutlich der Verriegelungszapfen 31, welcher am Lagerabschnitt 5 vorgesehen ist, dargestellt, welcher sowohl in ausgestellter Position als auch in geschlossener Position des Deckels in Eingriff mit dem Verriegelungsanschlag 32 steht, der an der Führungsschiene 4 ausgebildet ist. Der Verriegelungszapfen 31 taucht lediglich in abgesenkter Position des Schiebedaches (Fig. 3) unter den Verriegelungsanschlag.

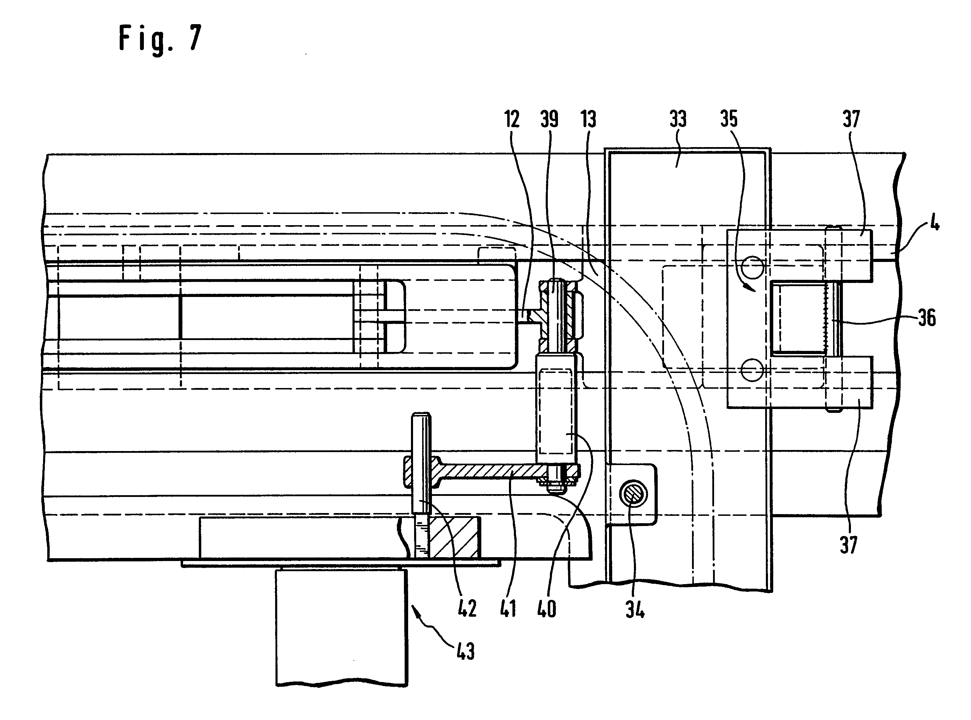

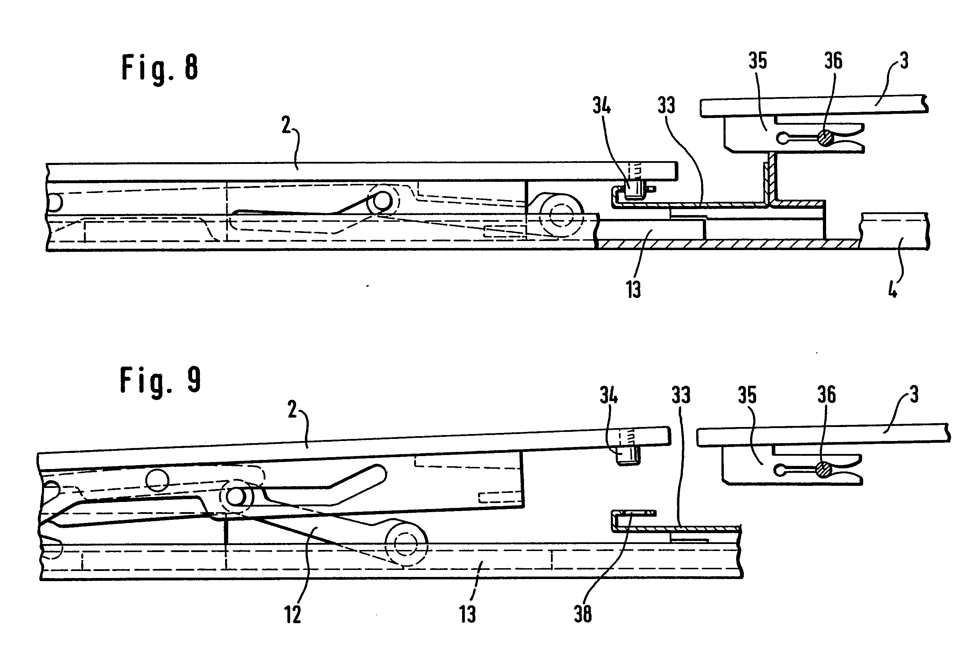

Fig. 7 zeigt eine Draufsicht auf das Schiebehebedach, wobei sich der Deckel in abgesenkter Position befindet; diese Deckelposition ist in Fig. 8 in einer Seitenansicht gezeigt. Die Wasserrinne 33 befindet sich unterhalb der hinteren Kante des Deckels 2 und dient der seitlichen Ableitung von Regenwasser. Die Wasserrinne 33 besitzt dabei ein Gefälle von der Deckelmitte zu den Führungsschienen 4. Die Wasserrinne 33 ist in Fahrzeuglängsachse verschiebbar jeweils in den Führungsschienen 4 geführt und steht bei abgesenktem Deckel 2 über den Nocken 34 in Eingriff mit dem Deckel 2. In dieser Position des Deckels 2 liegt die Wasserrinne 33 auch am hinteren Gleitstück 13 an. Wird der Deckel 2 nach hinten unter das Fahrzeugdach 3 geschoben, so bewegt sich die Rinne 33 als Querbrücke mit. Sie dient daher sowohl der Stabilisierung des Deckels als auch der Synchronisierung der Bewegung zwischen dem linken und rechten hinteren Gleitstück 13.

Erreicht der Deckel 2 bzw. der Schlitten 6 während der Schließbewegung seinen vorderen Anschlag, so befindet sich das Schiebehebedach in der in Fig. 7 und 8 dargestellten Position. In dieser Position ist die Wasserrinne 33 gerade während der Vorwärtsbewegung mittels ihres Querstiftes 36 in die am Fahrzeugdach 3 befestigte Einrastvorrichtung 35 eingeschnappt. Hierzu weist die Einrastvorrichtung 35, welche links und rechts jeweils oberhalb der Führungsschienen 4 vorgesehen ist, klammerförmige, vertikal elastisch aufspreizbare Abschnitte 37 auf, in deren zylinderförmigen Ausnehmung der Querstift 36 axial fixiert aufgenommen wird. Wird zum Verschwenken des Deckels 2 nach oben das hintere Gleitstück 13 nach vorne in Richtung Schlitten 6 bewegt, so geraten die Nocken 34 durch die Schwenkbewegung außer Eingriff mit den Ausnehmungen 38 an der Wasserrinne 33; die Wasserrinne 33 steht nun lediglich in Eingriff mit den Führungsschienen 4 und mit der Einrastvorrichtung 35.

In Fig. 7 ist auch die Befestigungsvorrichtung für den Fahrzeughimmel, d.h., die Innenverkleidung des Deckels, dargestellt. Hierzu ist an dem Bolzen 39, der den Ausstellhebel 12 mit dem hinteren Gleitstück 13 verbindet, ein nach innenragender Verlängerungsabschnitt 40 vorgesehen, welcher das hintere Gleitstück 13 in Querrichtung überragt und über einen Längshebel 41 und einen weiteren Bolzen 42 mit der Querschiene 43 verbunden ist. Die Querschiene 43 führt zu einer symmetrisch gegenüberliegenden Befestigungsvorrichtung und hält die Innenverkleidung am Deckel 2.

Bezugszeichenliste

1. Trägerteil
2. Deckel
3. Fahrzeugdach
4. Führungsschiene
5. Lagerabschnitt
6. Schlitten
7. Bolzenverbindung
8. Steg
9. Steuerkulisse
10. Öffnung
11. Endabschnitt
12. Ausstellhebel
13. hinteres Gleitstück
14. Bolzen
15. erster Steuerschlitz
16. Antriebskabel
17. U-Profil
18. zweiter Steuerschlitz
19. Schieber
20. Verbindungsglied
21. untere Achse
22. Lagerrolle
23. Zapfen
24. Abstand
25. Verriegelungsstange
26. Lagerpunkt
27. Stufe
28. Steuerschieber
29. Windabweiser
30. Feder
31. Verriegelungszapfen
32. Verriegelungsanschlag
33. Wasserrinne
34. Nocken
35. Einrastvorrichtung
36. Querstift
37. Abschnitt
38. Ausnehmung
39. Bolzen
40. Verlängerungsabschnitt
41. Längshebel
42. Bolzen
43. Querschiene

## Ansprüche

1. Schiebehebedach für Kraftfahrzeuge, in deren Dachfläche eine Öffnung vorgesehen ist, die mittels eines Deckels verschließbar ist, der wahlweise mit einer Kante über die Dachfläche ausstellbar ist oder nach Absenken durch in Führungsschienen gelagerte Gleitstücke geführt unter die Dachfläche verschiebbar ist, wobei der Deckel mit Trägerteilen verbunden ist, die schwenkbar an je einem vorderen Gleitstück angelenkt sind und die einen Steuerschlitz aufweisen, in welchen jeweils ein Aus- stellelement eingreift, welches schwenkbar mit je einem hinteren Gleitstück verbunden ist, dadurch ge kennzeichnet, daß im Trägerteil (1) ein Ver- bindungsglied (20) in Längsrichtung des Trägerteils (1) verschiebbar angeordnet ist, welches in Eingriff in eine Steuerkulisse (9) des vorderen Gleitstückes (6) bringbar ist.

2. Schiebehebedach für Kraftfahrzeuge in deren Dachfläche eine Öffnung vorgesehen ist, die mittels eines Deckel verschließbar ist, der wahlweise mit einer Kante über die Dachfläche ausstellbar ist, oder nach Absenken durch Führungsschienen gelagerte Gleitstücke geführt unter die Dachfläche verschiebbar ist, wobei der Deckel mit Trägerteilen verbunden ist, die schwenkbar an je einem vorderen Gleitstück angelenkt sind und die einen Steuerschlitz aufweisen, in welchen jeweils ein Ausstellelement eingreift, welches schwenkbar mit je einem hinteren Gleitstück verbunden ist, insbesondere nach Anspruch 1, dadurch gekennzeichnet, daß eine Wasserrinne (33) vorgesehen ist die nur in abgesenktem Zustand des Deckels (2) mit letztgenanntem bzw. einem mit diesem starr verbundenen Bauteil in Eingriff steht.

3. Schiebehebedach nach Anspruch 2, dadurch gekennzeichnet, daß der Eingriff des Deckels (2) in die Wasserrinne (33) durch mindestens einen am Deckel (2) angeordneten Nocken (34) erfolgt.

4. Schiebehebedach nach Anspruch 2 oder 3, dadurch gekennzeichnet, daß die Wasserrinne (33) etwa bei Erreichen der Schließposition des Deckels (2) mittels einer Einrastvorrichtung (35), die am Fahrzeugdach (3) befestigt ist, in Längsrichtung fixiert ist.

5. Schiebehebedach nach Anspruch einem der vorhergehenden Ansprüche, dadurch gekennzeichnet, daß das Verbindungsglied (20) mit dem Ausstellelement (12,14) verbunden ist.

6. Schiebehebedach nach einem der vorhergehenden Ansprüche, dadurch gekennzeichnet, daß das Verbindungsglied (20) in einem weiteren Steuerschlitz (18) des Trägerteils (1) vorgesehen ist.

7. Schiebehebedach nach einem der vorhergehenden Ansprüche, dadurch gekennzeichnet, das das Trägerteil (1) zumindest im Bereich der Steuerschlitze (15,18) ein U-Profil (17) besitzt, innerhalb welchem das Ausstellelement (12,14) und daß Verbindungsglied (20) zentral und symmetrisch angeordnet ist.

8. Schiebehebedach nach einem der vorhergehenden Ansprüche, dadurch gekennzeichnet, daß die Steuerschlitze (15,18) im Trägerteil (1) je einen ersten etwa parallel zur Längsachse des Trägerteils (1) verlaufenden Bereich aufweisen, an welchen sich in Öffnungsrichtung des Deckels (2) ein zweiter Bereich anschließt, welcher in Richtung auf den Deckel, d.h. schräg nach oben, geneigt ist, und daß die Steuerkulisse (9) einen vom Deckel weggerichteten, d.h. schräg nach unten abgewinkelten Abschnitt (11) aufweist.

9. Schiebehebedach nach einem der vorhergehenden Ansprüche, dadurch gekennzeichnet, daß das Ausstellelement (12) mittels eines nockenförmigen Bolzens (14) in den Steuerschlitz (15) eingreift, durch den ein Verriegelungselement (25) beaufschlagbar ist.

10. Schiebehebedach nach einem der vorhergehenden Ansprüche, dadurch gekennzeichnet, daß Mittel zum Einrasten des Trägerteils in das hintere Gleitstück (13) bei abgesenkter Deckelkante vorgesehen sind.

11. Schiebehebedach nach einem der vorhergehenden Ansprüche, dadurch gekennzeichnet, daß das vordere Ende des vorderen Gleitstückes (6) als Steuerschieber (28) eines Windabweisers (29) ausgebildet ist.

Fig. 1

Fig. 2

Fig. 3

EP 0 403 734 A2

Fig. 4

Fig. 5

Fig. 6

Fig. 7

EP 0 403 734 A2

Fig. 8

Fig. 9